# FASCICULE DE BREVET EUROPEEN

(11) **EP 4 487 026 B1**
(45) Date de publication et mention de la délivrance du brevet: **14.01.2026**
(21) Numéro de dépôt: 23708751.5
(22) Date de dépôt: 28.02.2023
(51) Int. Cl.: F16D 55/00, F16D 61/00, B60T 8/00

(54) **DISPOSITIF DE ROULAGE A FREINAGE MAGNETIQUE A FLUX RADIAL ET AXIAL COMBINES, ET AERONEF AINSI EQUIPE**
ROLL-VORRICHTUNG MIT MAGNETBREMSE MIT KOMBINIERTEM RADIAL- UND AXIALFLUSS UND FLUGZEUG, DER SO AUSGESTATTET IST
TAXIING DEVICE WITH MAGNETIC BRAKING WITH COMBINED RADIAL AND AXIAL FLUX, AND AIRCRAFT SO EQUIPPED

(30) Priorité: 02.03.2022 FR 2201832
(43) Date de publication de la demande: 08.01.2025
(73) Titulaire: Safran Landing Systems, 78140 Vélizy-Villacoublay (FR)
(72) Inventeur: KLIM, Graeme, 77550 MOISSY-CRAMAYEL (FR); NGUYEN, Duy-Minh, 77550 MOISSY-CRAMAYEL (FR)
(74) Mandataire: Cabinet Boettcher
(86) Numéro de dépôt international: PCT/EP2023/055045
(87) Numéro de publication internationale: WO 2023/165992

(56) Documents cités:
- CN-A- 104 065 236
- CN-A- 113 374 809
- FR-A1- 2 996 378
- FR-A1- 3 103 329
- US-A1- 2008 179 146
- US-A1- 2008 258 014
- US-A1- 2019 036 402
- US-A1- 2020 300 310

## Description

La présente invention concerne le domaine du freinage des roues de véhicule telles que les roues d'aéronef.

### ARRIERE PLAN DE L'INVENTION

Une roue d'aéronef comprend généralement une jante reliée par un voile à un moyeu monté pour tourner sur un arbre (essieu ou fusée) solidaire d'une extrémité d'un atterrisseur.

Il est connu des dispositifs de freinage par friction comprenant une pile de disques de freinage qui est logée dans un espace s'étendant entre la jante et le moyeu et qui comprend une alternance de disques rotoriques liés en rotation avec la roue et de disques statoriques fixes par rapport à l'arbre support de roue. Le dispositif de freinage comprend également des actionneurs hydrauliques ou électromécaniques montés sur un porte-actionneurs et agencés pour appliquer un effort de freinage commandé sur la pile de disques de manière à freiner la rotation de la roue.

Il a été proposé, notamment dans le document FR-A-2953196, d'équiper de telles roues freinées d'un frein auxiliaire électromagnétique assurant une dissipation d'énergie par d'autres moyens que la friction mécanique. Cependant, l'espace libre au niveau de la roue est extrêmement réduit de sorte que l'implantation d'un frein auxiliaire y est compliquée.

Sont en outre connus des dispositifs de freinage magnétique à courant de Foucault (dénommé « Eddy curent brake » en anglais) utilisés pour le freinage de roues de véhicules et plus particulièrement de roues d'aéronef. Le document WO-A-2014/029962 décrit un tel dispositif comprenant un stator qui est pourvu d'un ou plusieurs aimants et qui est monté en regard d'un rotor électriquement conducteur.

Des dispositifs de freinage magnétiques sont connus par exemple des documents US-A-2008/179146, CN-A-104065236, FR-A-2996378, US-A-2008/258014, FR-A-3103329, US-A-2019/036402 et CN-A-113374809. Le document US-A-20200300310 décrit lui aussi un dispositif de freinage magnétique à courant de Foucault.

D'une manière générale, les performances d'un dispositif de freinage magnétique à courant de Foucault dépendent de la puissance des aimants utilisés et de leurs dimensions. Le dispositif de freinage est donc relativement lourd et encombrant lorsque la puissance maximale de freinage requise est importante. Tel est le cas par exemple d'une utilisation sur avion, alors même que la masse et l'encombrement sont des contraintes sévères pour cette utilisation.

### OBJET DE L'INVENTION

L'invention a notamment pour but de proposer un dispositif de roulage présentant des performances de freinage améliorée tout en conservant un encombrement raisonnable.

### RESUME DE L'INVENTION

A cet effet, on prévoit, selon l'invention, un dispositif de roulage pour véhicule, comprenant une roue ayant un moyeu agencé pour être monté pour pivoter sur un arbre et une jante reliée au moyeu par un voile pour s'étendre coaxialement au moyeu. La jante comprend au moins une première partie annulaire s'étendant en saillie axiale du voile et délimitant avec celui-ci un logement recevant un dispositif de freinage magnétique à courants de Foucault comprenant un stator solidaire en rotation de l'arbre, un rotor solidaire en rotation de la roue. Le rotor est pourvu au moins d'une première surface en regard d'une première surface du stator pour former une première paire de surfaces, et d'une deuxième surface en regard d'une deuxième surface du stator pour former une deuxième paire de surfaces. Le dispositif de freinage magnétique comprend au moins une première pluralité d'aimants pour engendrer un premier flux magnétique qui traverse la première paire de surfaces et une deuxième pluralité d'aimants pour engendrer un deuxième flux magnétique qui traverse la deuxième paire de surfaces. La première paire de surfaces et la première pluralité d'aimants sont agencées de telle manière que le premier flux magnétique est axial et la deuxième paire de surfaces et la deuxième pluralité d'aimants sont agencées de telle manière que le deuxième flux magnétique est radial.

Cet agencement permet de combiner un freinage magnétique par courants de Foucault à flux radial et un freinage magnétique par courants de Foucault à flux axial. Ceci renforce donc le freinage magnétique par courant de Foucault en conservant un encombrement du dispositif de freinage qui ne pénalise pas l'intégration du dispositif de roulage dans un véhicule.

Avantageusement, la première paire de surfaces est agencée au voisinage d'un flanc de jante solidaire de la première partie annulaire de la jante à l'opposé du voile et la deuxième paire de surfaces est agencée dans le logement au voisinage de la première partie annulaire de la jante.

Le couple de freinage étant d'autant plus important que l'effort résistant s'applique en un point éloigné de l'axe de rotation de la roue, ce positionnement des paires de surfaces permet d'engendrer un couple de freinage relativement important.

De préférence, le rotor a au moins une troisième surface en regard d'une troisième surface du stator pour former une troisième paire de surfaces et le dispositif de freinage magnétique comprend au moins une troisième pluralité d'aimants pour engendrer un troisième flux magnétique, radial, passant par la troisième paire de surfaces.

Ceci améliore l'efficacité du freinage.

De préférence encore,
Selon un mode de réalisation particulier, le rotor comprend un premier manchon de rotor qui s'étend dans le logement le long de la partie annulaire de la jante et qui a une surface formant la première surface du rotor, et une collerette de rotor s'étendant en saillie vers l'extérieur de l'extrémité du manchon de rotor de manière à s'étendre devant un flanc solidaire de la partie annulaire de la jante et ayant, à l'opposé au flanc de la jante, une surface formant la deuxième surface du rotor ; et le stator comprend un manchon externe de stator agencé pour être engagé dans le premier manchon de rotor et avoir une surface formant la première surface du stator en regard de la première surface du premier manchon de rotor pour former la première paire de surfaces, et une collerette de stator s'étendant en saillie vers l'extérieur du manchon externe de stator de manière à avoir une surface formant la deuxième surface du stator s'étendant en regard de la deuxième surface du rotor pour former la deuxième paire de surfaces.

L'invention concerne également un aéronef équipé d'au moins un tel dispositif de roulage.

D'autres caractéristiques et avantages de l'invention ressortiront à la lecture de la description qui suit de modes de réalisation particuliers et non limitatifs de l'invention.

### BREVE DESCRIPTION DES DESSINS

Il sera fait référence aux dessins annexés, parmi lesquels :
[Fig. 1] la figure 1 est une vue schématique partielle d'un aéronef équipé de dispositifs de roulage selon l'invention ;
[Fig. 2] la figure 2 est une vue schématique partielle d'un dispositif de roulage selon un premier mode de réalisation de l'invention, en demi-coupe axiale, avec le stator du frein magnétique en position de freinage ;
[Fig. 3] la figure 3 est une vue partielle en perspective de ce dispositif de roulage avec le stator du frein magnétique en position de freinage
[Fig. 4] la figure 4 est une vue analogue à celle de la figure 2 de ce dispositif de roulage avec le stator du frein magnétique en position intermédiaire ;
[Fig. 5] la figure 5 est une vue analogue à celle de la figure 3 de ce dispositif de roulage avec le stator du frein magnétique en position intermédiaire ;
[Fig. 6] la figure 6 est une vue analogue à celle de la figure 2 de ce dispositif de roulage avec le stator du frein magnétique en position de libre rotation ;
[Fig. 7] la figure 7 est une vue analogue à celle de la figure 3 de ce dispositif de roulage avec le stator du frein magnétique en position de libre rotation ;
[Fig. 8] la figure 8 est une vue schématique, selon l'axe de rotation de la roue, de l'agencement des aimants sur le stator ;
[Fig. 9] la figure 9 est une vue analogue à celle de la figure 2 d'un dispositif de roulage selon une variante du premier mode de réalisation ;
[Fig. 10] la figure 10 est une vue schématique partielle d'un dispositif de roulage selon un deuxième mode de réalisation de l'invention, en demi-coupe axiale, avec le stator du frein magnétique en position de freinage ;
[Fig. 11] la figure 11 est une vue schématique partielle d'un dispositif de roulage selon un troisième mode de réalisation de l'invention, en coupe axiale, avec le stator du frein magnétique en position de freinage ;
[Fig. 12] la figure 12 est une vue schématique partielle d'un dispositif de roulage selon un quatrième mode de réalisation de l'invention, en coupe axiale, avec le stator du frein magnétique en position de freinage.

### DESCRIPTION DETAILLEE DE L'INVENTION

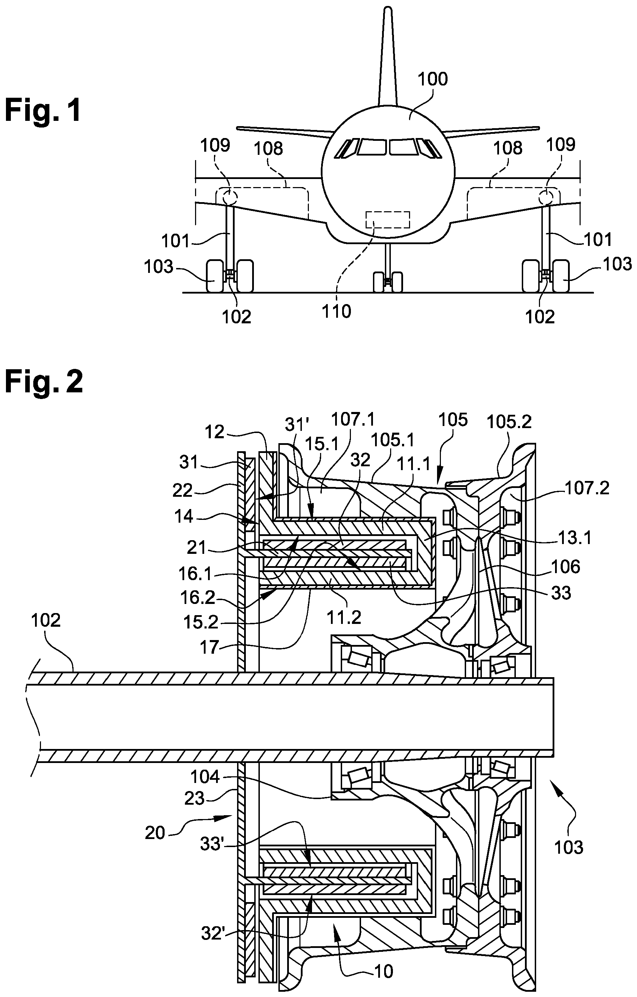

En référence aux figures 1 à 8, le premier mode de réalisation de l'invention est décrit en application à un aéronef 100 comportant des dispositifs de roulage formant chacun un atterrisseur monté sur la structure de l'aéronef pour pivoter entre une position sortie (représentée sur la figure 1) et une position rentrée dans une soute 108 sous l'action d'un actionneur de train 109 connu en lui-même et relié à une unité électronique de commande 110. Chaque atterrisseur comporte une jambe 101 ayant une extrémité pourvue de deux arbres 102 coaxiaux sur chacun desquels est montée pour pivoter une roue 103. Chaque roue 103 comporte de façon connue en soi un moyeu 104 monté pour pivoter sur l'arbre 102 et une jante 105 qui est reliée au moyeu 104 par un voile 106 et qui possède deux flancs annulaires entre lesquels est logé un pneumatique. Les deux arbres 102 sont d'une seule pièce, creux et ont une surface extérieure servant de portée aux roulements guidant le moyeu 104 de chaque roue 103 en rotation autour de l'axe central de l'arbre 102.

La jante 105 comprend une première partie annulaire 105.1 qui s'étend en saillie du voile 106 et en regard du moyeu 104 en délimitant avec celui-ci un premier logement 107.1, annulaire, ayant une extrémité fermée par le voile 106 et une extrémité ouverte vers la jambe 101. La jante 105 comprend une deuxième partie annulaire 105.2 s'étendant en saillie du voile 106 à l'opposé de la première partie annulaire 105.1 en délimitant un deuxième logement 107.2 de forme cylindrique ayant une extrémité fermée par le voile 106 et une extrémité ouverte à l'opposé.

Selon l'invention, les roues 103 sont équipées chacune d'un dispositif de freinage magnétique logé dans le premier logement 107.1.

Le dispositif de freinage magnétique comprend un rotor généralement désigné en 10 et un stator généralement désigné en 20.

Le rotor 10 comprend un premier manchon 11.1 qui est engagé dans la première partie annulaire 105.1 de la jante 105 et qui a une surface extérieure 15.1 s'étendant au voisinage de la première partie annulaire 105.1 et une surface intérieure 16.1 opposée à la surface extérieure 15.1. Le premier manchon 11.1 comprend une première extrémité voisine du voile 106 et à l'opposé une deuxième extrémité qui fait saillie du premier logement 107.1 et qui est pourvue d'une collerette 12 s'étendant en saillie radiale vers l'extérieur de la deuxième extrémité pour s'étendre en avant du flanc solidaire de la partie annulaire 105.1 de la jante 105 et parallèlement audit flanc.

Le rotor 10 comprend un deuxième manchon 11.2 s'étendant dans le premier manchon 11.1 pour former une goulotte ayant une cloison de fond 13.1 s'étendant radialement pour réunir la première extrémité du premier manchon 11.1 à une première extrémité du deuxième manchon 11.2. Le deuxième manchon 11.2 a une surface extérieure 15.2 s'étendant en regard de la surface intérieure 16.1 du premier manchon 11.1 et, à l'opposé, une surface intérieure 16.2.

Le rotor 10 est en cuivre (ou tout autre matériau électriquement conducteur, comme l'aluminium) et est pourvu du côté de la jante 105, du voile 106 et du moyeu 104 d'un écran thermique 17 pour limiter la transmission de chaleur vers les autres composants de la roue dont la jante 105 et le pneumatique. Le rotor 10 est lié en rotation à la partie annulaire 105.1 par exemple par l'intermédiaire de vis de fixation de la collerette 12 au flanc de la partie annulaire 105.1.

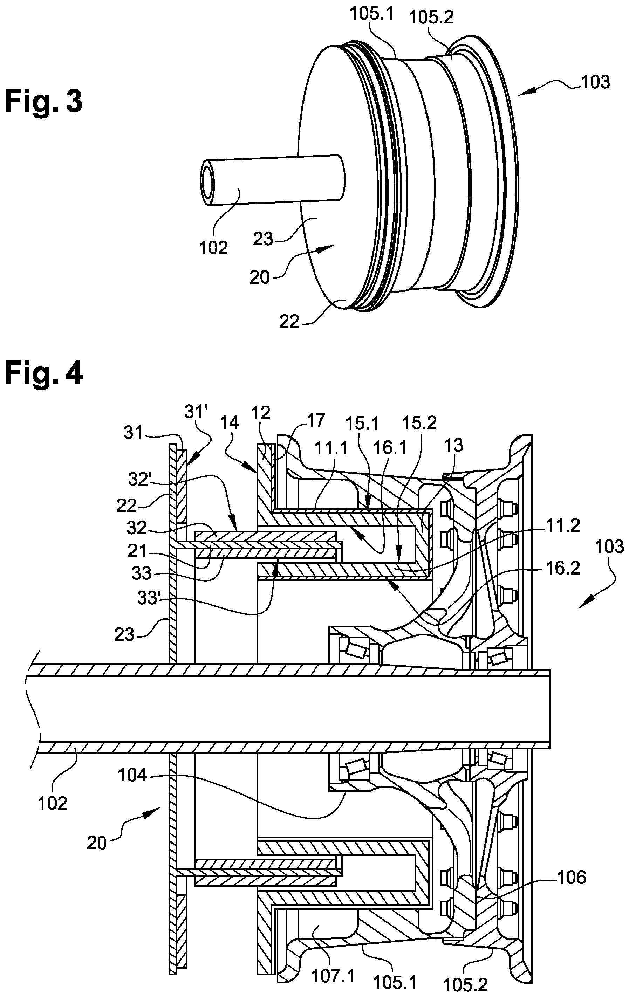

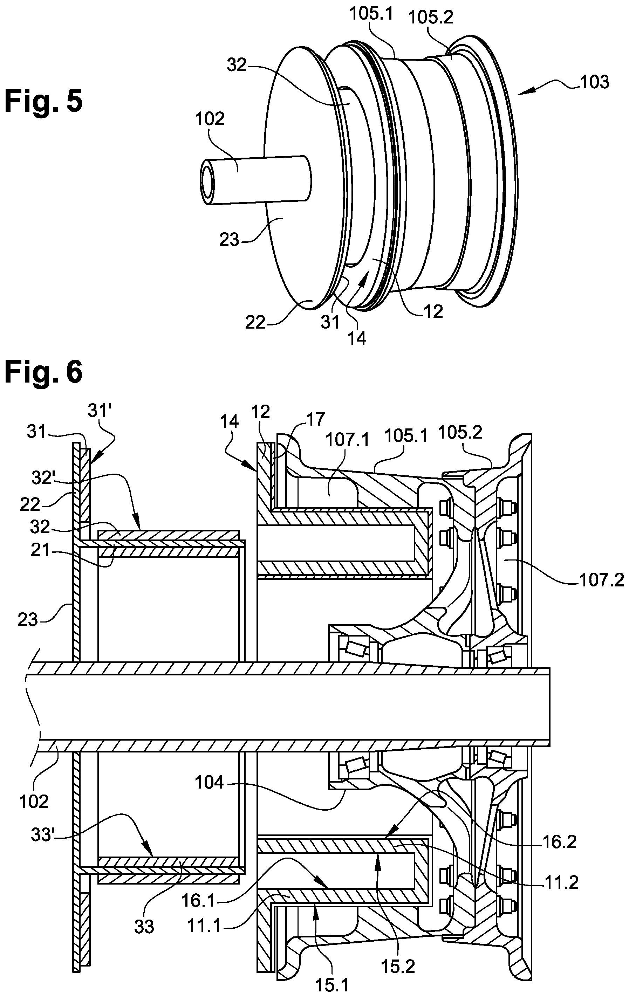

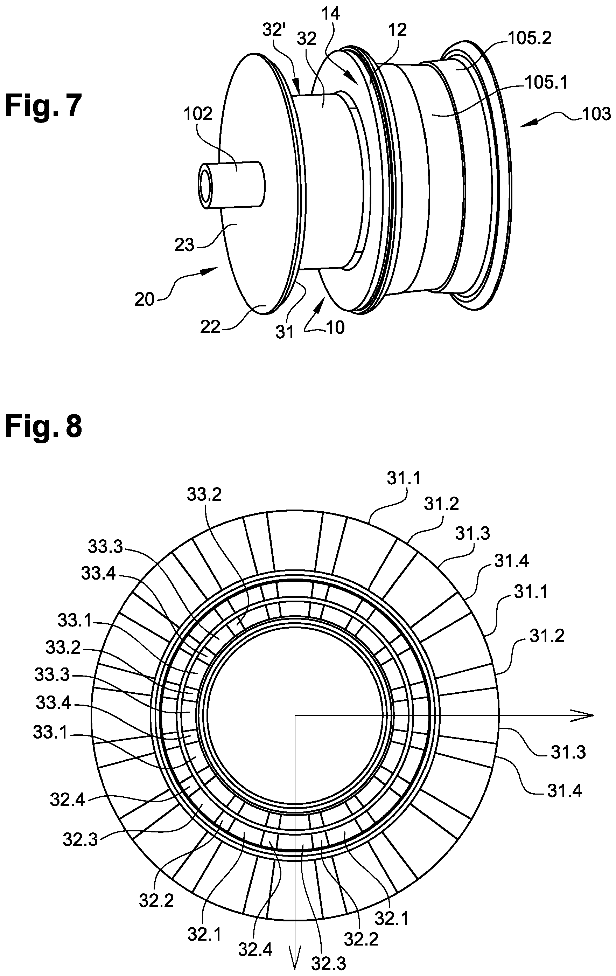

Le stator 20 comprend un manchon unique, appelé manchon externe, 21 qui est agencé pour pouvoir être engagé entre les manchons 11.1, 11.2 et qui possède une première extrémité du côté de la cloison de fond 13 et à l'opposé une deuxième extrémité à partir de laquelle s'étend en saillie vers l'extérieur une collerette 22 s'étendant en regard de la collerette 12 parallèlement à celle-ci. La collerette 22 et le manchon 21 sont solidaires d'un disque 23 lié en rotation à l'arbre 102 par exemple par un système de type nervure/cannelure et relié mécaniquement à un actionneur électromécanique linéaire non visible sur les figures mais connu en lui-même. L'actionneur électromécanique linéaire est agencé pour déplacer le stator 20 entre :
- une position de freinage dans laquelle les collerettes 12, 22 sont rapprochées et le manchon 21 est engagé entre les manchons 11.1, 11.2 (figures 2 et 3), et
- une position de libre rotation dans laquelle les collerettes 12, 22 sont écartées et le manchon 21 est dégagé des manchons 11.1, 11.2 (figures 6 et 7).

Le dispositif de freinage magnétique comprend en outre trois couronnes magnétiques 31, 32, 33 comportant chacune une pluralité d'aimants.

La couronne magnétique 31 est fixée sur la surface annulaire plane de la couronne 22 s'étendant en regard de la surface annulaire plane 14 de la couronne 12 opposée au flanc de la partie annulaire 105.1. La surface principale libre 31' de la couronne magnétique 31 forme une première surface du stator 20 par laquelle est émis un flux magnétique axial en direction d'une première surface du rotor 10 formée par la surface annulaire plane 14 de la couronne 12. La surface principale libre 31' et la surface annulaire plane 14 forment une première paire de surfaces de passage du flux magnétique (un premier entrefer) lorsque le stator 20 est en position de freinage.

La couronne magnétique 32 est fixée sur la surface cylindrique extérieure du manchon externe 21 s'étendant en regard de la surface intérieure 16.1 du premier manchon 11.1. La surface principale libre 32' de la couronne magnétique 32 forme une deuxième surface du stator 20 par laquelle est émis un flux magnétique radial en direction d'une deuxième surface du rotor 10 formée par la surface intérieure 16.1 du premier manchon 11.1. La surface principale libre 32' et la surface intérieure 16.1 forment une deuxième paire de surfaces de passage du flux magnétique (un deuxième entrefer) lorsque le stator 20 est en position de freinage.

La couronne magnétique 33 est fixée sur la surface cylindrique intérieure du manchon externe 21 s'étendant en regard de la surface extérieure 15.2 du deuxième manchon 11.2. La surface principale libre 33' de la couronne magnétique 33 forme une troisième surface du stator 20 par laquelle est émis un flux magnétique radial en direction d'une troisième surface du rotor 10 formée par la surface extérieure 15.2 du deuxième manchon 11.2. La surface principale libre 33' et la surface intérieure 15.2 forment une troisième paire de surfaces de passage du flux magnétique (un troisième entrefer) lorsque le stator 20 est en position de freinage.

En référence à la figure 8, la première couronne magnétique 31 comprend des premiers aimants 31.1, 31.3 qui ont un premier vecteur de magnétisation sensiblement perpendiculaire à la face principale annulaire de la collerette 22 et qui sont séparés deux à deux par un deuxième aimant 31.2, 31.4 ayant un deuxième vecteur de magnétisation sensiblement perpendiculaire aux premiers vecteurs de magnétisation des deux premiers aimants 31.1, 31.3 entre lesquels se trouve le deuxième aimant 31.2, 31.4. On rappelle que le vecteur de magnétisation indique la direction du champ magnétique engendré par un aimant et s'étend, dans l'aimant, du pôle Sud au pôle Nord. Plus précisément, les aimants 31.1, 31.2, 31.3, 31.4 ont des formes de secteurs angulaires et ont une longueur mesurée selon une direction radiale du stator 20 et une largeur moyenne mesurée selon une direction localement tangentielle de la collerette 22 (c'est-à-dire perpendiculairement à la direction de la longueur) à moitié de ladite longueur. Les longueurs et largeurs sont mesurées selon des directions localement parallèles à la surface principale de la collerette 22.

Les aimants 31.1, 31.2, 31.3, 31.4 sont disposés selon un motif de Halbach, en alternance selon la direction circonférentielle de la couronne d'aimants 31 (et donc du stator 20) comme suit : un aimant 31.1, un aimant 31.2, un aimant 31.3, un aimant 31.4, un aimant 31.1, un aimant 31.2, un aimant 31.3, un aimant 31.4 et ainsi de suite... En l'occurrence :
- chaque aimant 31.1 a son vecteur de magnétisation qui sort de la première face principale 31' vers la collerette 12 (son pôle Nord débouche sur ladite face principale),
- chaque aimant 31.2 a son vecteur de magnétisation qui s'étend depuis l'aimant 31.1 voisin vers l'aimant 31.3 voisin,
- chaque aimant 31.3 a son vecteur de magnétisation qui rentre dans ladite face principale 31' (son pôle Sud débouche sur ladite face principale),
- chaque aimant 31.4 a son vecteur de magnétisation qui s'étend depuis l'aimant 31.1 voisin vers l'aimant 31.3 voisin.

On comprend que les aimants 31.2, 31.4 disposés de chaque côté d'un même aimant 31.1 ont leur vecteur de magnétisation orientés dans des sens opposés.

De préférence, selon une version avantageuse de l'invention, les aimants 31.1, 31.2, 31.3, 31.4 ont des largeurs telles que les premiers aimants 31.1, 31.3 sont espacés deux à deux d'une première distance (égale à la largeur des aimants 31.2, 31.4) inférieure à une deuxième distance (égale à la largeur des aimants 31.1, 31.3) séparant deux à deux les deuxièmes aimants 31.2, 31.4. Les meilleurs résultats sont obtenus lorsque la largeur des deuxièmes aimants 31.2, 31.4 est 70% environ celles des premiers aimants 31.1, 31.3.

Les longueurs des aimants 31.1, 31.2, 31.3, 31.4 sont identiques les unes aux autres. On comprend que les aimants 31.2, 31.4 occupent sur la face principale 31' une surface moindre que celle des aimants 31.1, 31.3.

L'agencement des aimants 31.1, 31.2, 31.3, 31.4 selon le motif de Halbach permet d'optimiser et de concentrer le flux magnétique produit par les aimants 31.1, 31.3 en réduisant le chemin de retour du flux magnétique qui passe par les aimants 31.2, 31.4 et non par la collerette 22 dont la masse peut être réduite puisqu'elle n'a pas besoin d'assurer une fonction de conduction du flux magnétique.

La deuxième couronne magnétique 32 possède des aimants ayant une forme de secteurs annulaires accolés les uns aux autres par leurs bords parallèles autour du manchon 21 avec la même alternance que ceux de la première couronne magnétique 31 pour former un motif de Halbach selon la circonférence du manchon 21. On aura donc des premiers aimants 32.1, 32.3 qui ont chacun un premier vecteur de magnétisation s'étendant selon un rayon local (direction localement normale à la surface extérieure du manchon externe 21 en regard de l'aimant 32.1, 32.3 en question) et qui sont séparés deux à deux par un deuxième aimant 32.2, 32.4 ayant un deuxième vecteur de magnétisation sensiblement tangentiel à la surface extérieure du manchon 21 et contenu dans un plan perpendiculaire à l'axe central du manchon 21.

Les aimants 32.1, 32.2, 32.3, 32.4 sont disposés selon un motif de Halbach, en alternance selon la direction circonférentielle du manchon 21 comme suit : un aimant 32.1, un aimant 32.2, un aimant 32.3, un aimant 32.4, un aimant 32.1, un aimant 32.2, un aimant 32.3, un aimant 32.4 et ainsi de suite... En l'occurrence :
- chaque aimant 32.1 a son vecteur de magnétisation qui sort de la surface principale 32' (son pôle Nord débouche sur la surface principale 32'),
- chaque aimant 32.2 a son vecteur de magnétisation qui s'étend depuis l'aimant 32.1 voisin vers l'aimant 32.3 voisin,
- chaque aimant 32.3 a son vecteur de magnétisation qui rentre dans la surface principale 32' (son pôle Sud débouche sur la surface principale 32'),
- chaque aimant 32.4 a son vecteur de magnétisation qui s'étend depuis l'aimant 32.1 voisin vers l'aimant 32.3 voisin.

On comprend que les aimants 32.2, 32.4 disposés de chaque côté d'un même aimant 32.1 ont leurs vecteurs de magnétisation orientés dans des sens opposés. Les aimants 32.1 sont alignés avec les aimants 31.1, les aimants 32.2 sont alignés avec les aimants 31.2, les aimants 32.3 sont alignés avec les aimants 31.3, et les aimants 32.4 sont alignés avec les aimants 31.4.

La troisième couronne magnétique 33 possède des aimants ayant une forme de secteurs annulaires accolés les uns aux autres par leurs bords parallèles dans le manchon 21 avec la même alternance que ceux de la première couronne magnétique 31 pour former un motif de Halbach selon la circonférence du manchon 21. On aura donc des premiers aimants 33.1, 33.3 qui ont chacun un premier vecteur de magnétisation s'étendant selon un rayon local (direction localement normale à la surface extérieure du manchon externe 21 en regard de l'aimant 33.1, 33.3 en question) et qui sont séparés deux à deux par un deuxième aimant 33.2, 33.4 ayant un deuxième vecteur de magnétisation sensiblement tangentiel à la surface extérieure du manchon 21 et contenu dans un plan perpendiculaire à l'axe central du manchon 21.

Les aimants 33.1, 33.2, 33.3, 33.4 sont disposés selon un motif de Halbach, en alternance selon la direction circonférentielle du manchon 21 comme suit : un aimant 33.1, un aimant 33.4, un aimant 33.3, un aimant 33.2, un aimant 33.1, un aimant 33.4, un aimant 33.3, un aimant 33.2 et ainsi de suite... En l'occurrence :
- chaque aimant 33.1 a son vecteur de magnétisation qui sort de la surface principale 33' (son pôle Nord débouche sur la surface principale 33'),
- chaque aimant 33.2 a son vecteur de magnétisation qui s'étend depuis l'aimant 33.1 voisin vers l'aimant 33.3 voisin,
- chaque aimant 33.3 a son vecteur de magnétisation qui rentre dans la surface principale 33' (son pôle Sud débouche sur la surface principale 33'),
- chaque aimant 33.4 a son vecteur de magnétisation qui s'étend depuis l'aimant 33.1 voisin vers l'aimant 33.3 voisin.

On comprend que les aimants 33.2, 33.4 disposés de chaque côté d'un même aimant 33.1 ont leurs vecteurs de magnétisation orientés dans des sens opposés. Les aimants 33.1 sont en regard des aimants 32.3, les aimants 33.2 sont en regard des aimants 32.2, les aimants 33.3 sont en regard des aimants 32.1, et les aimants 33.4 sont en regard des aimants 32.4.

Les aimants sont ici à base de terres rares ; la couronne 22 et le manchon externe 21 sont de préférence en acier magnétique, mais peuvent être en un matériau non magnétique.

En fonctionnement, l'actionneur électromécanique linéaire est agencé, comme on l'a dit, pour déplacer axialement le stator 20 entre :
- une première position axiale ou position de freinage (représentée aux figures 2 et 3), et
- une deuxième position axiale ou position de libre rotation (représentée aux figures 6 et 7).

Dans la première position axiale, le manchon externe 21 est engagé entre le manchon 11.1 et le manchon 11.2 (les aimants 32.1, 32.2, 32.3, 32.4 sont sur toute leur longueur en regard de la surface intérieure 16.1 du manchon 11.1 et en sont séparés par un entrefer radial ; et les aimants 33.1, 33.2, 33.3, 33.4 sont sur toute leur longueur en regard de la surface extérieure 15.2 du manchon 11.2 et en sont séparés par un entrefer radial) et la collerette 22 est rapprochée de la collerette 12 (les aimants 31.1, 31.2, 31.3, 31.4 sont séparés de la surface principale de la collerette 12 opposée à la jante 105 par un premier entrefer axial). La première couronne magnétique 31 est apte à engendrer des courants de Foucault dans la collerette 12 du rotor 10 lorsque le stator 20 est dans la première position axiale par rapport au rotor 10 et que le rotor 10 pivote en regard du stator 20. La deuxième couronne magnétique 32 est apte à engendrer des courants de Foucault dans le manchon 11.1 du rotor 10 lorsque le stator 20 est dans sa première position axiale par rapport au rotor 10 et que le rotor 10 pivote en regard du stator 20. La troisième couronne magnétique 33 est apte à engendrer des courants de Foucault dans le manchon 11.2 du rotor 10 lorsque le stator 20 est dans sa première position axiale par rapport au rotor 10 et que le rotor 10 pivote en regard du stator 20. Les courants de Foucault engendrés sont susceptibles de produire un effort significatif de freinage du rotor 10.

Dans la deuxième position axiale, le manchon 21 est dégagé des manchons 11.1 et 11.2 (les aimants 32.1, 32.2, 32.3, 32.4 ne sont plus en regard de la surface intérieure 16.1 du manchon 11.1 et les aimants 33.1, 33.2, 33.3, 33.4 ne sont plus en regard de la surface extérieure 15.2 du manchon 11.2) et la collerette 22 est écartée de la collerette 12 (les aimants 31.1, 31.2, 31.3, 31.4 sont séparés de la surface principale de la collerette 12 opposée à la jante 105 par un deuxième entrefer axial supérieur au premier entrefer axial). Dans cette deuxième position, les couronnes magnétiques 31, 32, 33 ne sont plus aptes à engendrer dans le rotor 10 des courants de Foucault susceptibles de produire un effort significatif de freinage de la roue lorsque le rotor 10 pivote en regard du stator 20 quelle que soit sa vitesse de rotation.

On comprend que pour provoquer le freinage, l'actionneur électromécanique linéaire est piloté pour amener le stator 20 dans la première position axiale et que, pour interrompre le freinage, l'actionneur électromécanique linéaire est piloté pour amener le stator 20 dans la deuxième position axiale, position dans laquelle les aimants ne permettent pas d'engendrer dans le rotor 10 des courants de Foucault suffisants pour provoquer le freinage du rotor 10. Entre les deux positions ci-dessus (l'actionneur électromagnétique linéaire peut ici amener le stator dans n'importe quelle position intermédiaire), le dispositif de freinage magnétique peut produire des valeurs intermédiaires de couple de freinage (voir les figures 4 et 5). On notera qu'en dessous d'une certaine vitesse de rotation du rotor 10, le couple de freinage est négligeable quelle que soit la position du stator 20.

Les éléments identiques ou analogues à ceux précédemment décrit portent les mêmes références numériques dans les figures et la suite de la description concernant la variante du premier mode de réalisation et les autres modes de réalisation.

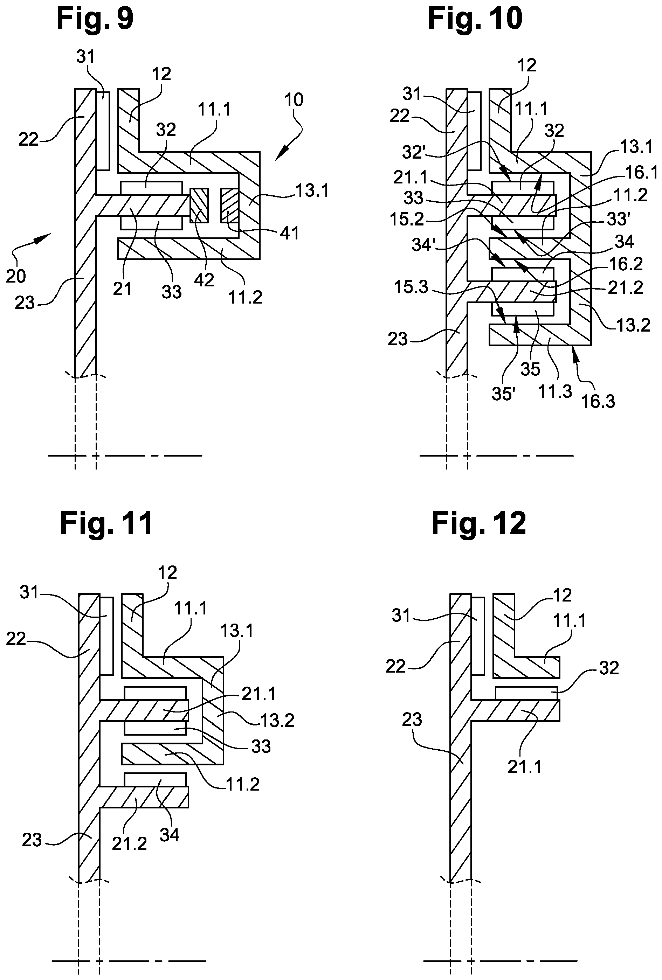

Dans la variante de la figure 9, la cloison de fond 13.1 et la première extrémité (ou bord libre) du manchon externe 21 sont agencés pour former des surfaces de friction et le stator 20 est mobile par rapport au rotor 10 entre une position de friction dans laquelle les surfaces de friction sont en contact et une position sans friction dans laquelle les surfaces de friction sont écartées l'une de l'autre. La cloison de fond 13.1 et la première extrémité du manchon externe 21 sont ici pourvues de garniture de friction 41, 42. On comprend qu'en position de friction, le dispositif de freinage magnétique procure à la fois un freinage par friction et un freinage par courants de Foucault alors qu'en position sans friction le dispositif de freinage magnétique procure uniquement un freinage par courants de Foucault. Le déplacement du stator 20 entre ses deux positions est assuré par l'actionneur électromécanique linéaire.

Dans le deuxième mode de réalisation de la figure 10, le rotor 10 comprend un troisième manchon 11.3 s'étendant dans le deuxième manchon 11.2 pour former une goulotte ayant une cloison de fond 13.2 s'étendant radialement pour réunir la première extrémité du deuxième manchon 11.2 à une première extrémité du troisième manchon 11.3. Le troisième manchon 11.3 a une surface extérieure 15.3 s'étendant en regard de la surface intérieure 16.2 du deuxième manchon 11.2 et, à l'opposé, une surface intérieure 16.3.

Le stator 20 comprend un manchon externe 21.1 identique au manchon 21 et un manchon interne 21.2 qui est agencé pour pouvoir être engagé entre les manchons 11.2, 11.3 et qui possède une première extrémité du côté de la cloison de fond 13.2 et à l'opposé une deuxième extrémité solidaire du disque 23.

Le dispositif de freinage comprend une quatrième couronne magnétique 34 s'étendant autour du manchon interne 21.2 (comme la deuxième couronne magnétique 32 autour du manchon externe 21.1) et une cinquième couronne magnétique 35 s'étendant dans le manchon interne 21.2 (comme la deuxième couronne magnétique 33 dans le manchon externe 21.1).

La couronne magnétique 34 est fixée sur la surface cylindrique extérieure du manchon interne 21.2 s'étendant en regard de la surface intérieure 16.2 du deuxième manchon 11.2. La surface principale libre 34' de la couronne magnétique 34 forme une quatrième surface du stator 20 par laquelle est émis un flux magnétique radial en direction d'une quatrième surface du rotor 10 formée par la surface intérieure 16.2 du deuxième manchon 11.2. La surface principale libre 34' et la surface intérieure 16.2 forment une quatrième paire de surfaces de passage du flux magnétique lorsque le stator 20 est en position de freinage.

La couronne magnétique 35 est fixée sur la surface cylindrique intérieure du manchon interne 21.2 s'étendant en regard de la surface extérieure 15.3 du troisième manchon 11.3. La surface principale libre 35' de la couronne magnétique 35 forme une cinquième surface du stator 20 par laquelle est émis un flux magnétique radial en direction d'une cinquième surface du rotor 10 formée par la surface extérieure 15.3 du troisième manchon 11.3. La surface principale libre 35' et la surface intérieure 15.3 forment une cinquième paire de surfaces de passage du flux magnétique lorsque le stator 20 est en position de freinage.

L'agencement des aimants des quatrième et cinquième couronnes est identique à celui des deuxième et troisième couronnes respectivement.

Le fonctionnement est identique à celui du premier mode de réalisation. On comprend que le couple de freinage est plus important avec le deuxième mode de réalisation.

De préférence, le deuxième manchon 11.2 a une épaisseur telle qu'un effet de peau (autrement appelé effet pelliculaire ou effet Kelvin) soit engendré depuis chaque couronne magnétiques 33, 34 sur plus de la moitié de l'épaisseur du deuxième manchon 11.2 au moins sur une plage de vitesses relatives possibles du rotor 10 par rapport au stator 20. Les courants de Foucault engendrés depuis les deux couronnes magnétiques 33, 34 vont alors circuler dans la partie centrale du deuxième manchon 11.2, ce qui va augmenter le couple de freinage. On obtient ainsi une « superposition des effets de peau », l'épaisseur du deuxième manchon 11.2 étant suffisamment faible pour obtenir cet effet tout en satisfaisant les contraintes thermiques et mécaniques. Dans un exemple, cet effet donne environ 60% de performance en plus.

En référence à la figure 11 et selon le troisième mode de réalisation, le rotor 10 comprend un premier manchon 11.1 et un deuxième manchon 11.2 ; et le stator comprend un manchon externe 21.1 et un manchon interne 21.2 comme dans le deuxième mode de réalisation.

Le dispositif de freinage magnétique comprend uniquement trois couronnes magnétiques 31, 33, 34.

La couronne magnétique 31 est fixée sur la surface annulaire plane de la couronne 22 s'étendant en regard de la surface annulaire plane 14 de la couronne 12 opposée au flanc de la partie annulaire 105.1.

La couronne magnétique 33 est fixée sur la surface cylindrique intérieure du manchon externe 21.1 faisant face à la surface extérieure 15.2 du deuxième manchon 11.2.

La couronne magnétique 34 est fixée sur la surface cylindrique extérieure du manchon interne 21.2 s'étendant en regard de la surface intérieure 16.2 du deuxième manchon 11.2.

Le fonctionnement est identique à celui du premier mode de réalisation.

En référence à la figure 12 et selon le quatrième mode de réalisation, le rotor 10 comprend uniquement un premier manchon 11.1 et le stator comprend uniquement un manchon externe 21.1.

Le dispositif de freinage magnétique comprend uniquement deux couronnes magnétiques 31, 32 fixées et agencées comme dans le premier mode de réalisation.

Le fonctionnement est identique à celui du premier mode de réalisation. On comprend que ce mode de réalisation est le plus simple et le plus léger, la contrepartie étant qu'il est celui qui fournit le couple de freinage le plus faible. Bien entendu, l'invention n'est pas limitée aux modes de réalisation décrits mais englobe toute variante entrant dans le champ de l'invention telle que définie par les revendications.

En particulier, le dispositif peut avoir une structure différente de celle décrite.

De préférence, les pluralités d'aimants 31, 32, 33, 34, 35 sont solidaires du stator 20 et le rotor 10 est en matériau électriquement conducteur. Cependant, en variante, les aimants peuvent être portés par le rotor au lieu du stator. La forme, l'agencement et les dimensions des aimants peuvent être différents de ceux décrits. De préférence, les premiers aimants 11, 13 représentent 70% environ de la surface de l'élément qui les porte mais ce n'est pas obligatoire. Les aimants peuvent avoir des longueurs identiques ou pas, des largeurs identiques ou pas, être positionnés ou pas symétriquement sur un cercle passant par le centre géométrique des pôles Nord des aimants 11 et Sud des aimants 13.

L'utilisation d'un motif de Halbach n'est pas obligatoire. Le nombre de rotors et/ou le nombre de stators peuvent être différents de ceux mentionnés, de même que le nombre de manchons et de collerettes pour chacun de ceux-ci.

Le dispositif de freinage magnétique peut mettre en œuvre des aimants permanents et des électroaimants alimentés via des câbles pour inhiber ou renforcer le champ magnétique des aimants permanents, le stator étant alors fixe en translation.

De préférence, le rotor 10 comprend une couche de cuivre et une couche d'acier magnétique.

D'une manière générale, les actionneurs peuvent être hydraulique ou électrique.

Le dispositif de roulage peut comprendre un dispositif additionnel de freinage à friction qui comprend des rotors et des stators pour former une pile de disques, coaxiaux à la roue 103, ayant donc des axes centraux confondus avec l'axe de rotation de la roue 103. Les stators et les rotors sont disposés en alternance et ont des faces principales en regard les unes des autres et parallèles les unes aux autres pour pouvoir être pressées les unes contre les autres et fournir un freinage par friction. L'effort de presse de la pile de disques est exercé par des actionneurs commandables, de façon connue en elle-même, par le pilote de l'avion pour déplacer les stators de manière à pouvoir presser ou relâcher la pile de disques et appliquer, modu-ler ou interrompre l'effort de freinage de la roue 103. Le dispositif de freinage par friction est connu en lui-même et ne sera pas plus détaillé ici. Les actionneurs du frein à friction peuvent être hydrauliques ou électromécaniques. Chaque actionneur électromécanique comprend un moteur électrique et un poussoir apte à être déplacé par le moteur électrique pour presser la pile de disques. L'actionneur électromécanique est ainsi destiné à produire un effort de freinage commandé sur la pile de disques. Un mode de pilotage des dispositifs de freinage est par exemple connu du document FR-A-2953196.

L'invention est utilisable sur tout type de véhicule.

## Revendications

1. Dispositif de roulage pour véhicule, comprenant une roue (103) ayant un moyeu (104) agencé pour être monté pour pivoter sur un arbre (102) et une jante (105) reliée au moyeu par un voile (106) pour s'étendre coaxialement au moyeu, la jante comprenant au moins une première partie annulaire (105.1) s'étendant en saillie axiale du voile et délimitant avec celui-ci un logement (107.1) recevant un dispositif de freinage magnétique à courants de Foucault comprenant un stator (20) solidaire en rotation de l'arbre, un rotor (10) solidaire en rotation de la roue et pourvu d'une première surface (14) en regard d'une première surface (31') du stator pour former une première paire de surfaces, et au moins une première pluralité d'aimants (31) pour engendrer un premier flux magnétique qui traverse la première paire de surfaces, **caractérisé en ce que** le rotor comprend au moins une deuxième surface (16.1) en regard d'une deuxième surface (32') du stator pour former une deuxième paire de surfaces et le dispositif de freinage magnétique comprend au moins une deuxième pluralité d'aimants (32) pour engendrer un deuxième flux magnétique qui traverse la deuxième paire de surfaces, et **en ce que** la première paire de surfaces et la première pluralité d'aimants sont agencées de telle manière que le premier flux magnétique est axial et la deuxième paire de surfaces et la deuxième pluralité d'aimants sont agencées de telle manière que le deuxième flux magnétique est radial.

2. Dispositif de roulage selon la revendication 1, dans lequel la première paire de surfaces est agencée au voisinage d'un flanc de jante solidaire de la première partie annulaire (105.1) de la jante à l'opposé du voile (106) et la deuxième paire de surfaces est agencée dans le logement (107.1) au voisinage de la première partie annulaire de la jante.

3. Dispositif de roulage selon la revendication 1 ou 2, dans lequel le rotor (10) a au moins une troisième surface (15.2) en regard d'une troisième surface (33') du stator (20) pour former une troisième paire de surfaces et le dispositif de freinage magnétique comprend au moins une troisième pluralité d'aimants (33) pour engendrer un troisième flux magnétique, radial, passant par la troisième paire de surfaces.

4. Dispositif de roulage selon la revendication 3, dans lequel le rotor (10) a au moins une quatrième surface (16.2) en regard d'une quatrième surface (34') du stator (10) pour former une quatrième paire de surfaces et le dispositif de freinage magnétique comprend au moins une quatrième pluralité d'aimants pour engendrer un quatrième flux magnétique, radial, passant par la quatrième paire de surfaces.

5. Dispositif de roulage selon la revendication 1, dans lequel : le rotor (10) comprend un premier manchon de rotor (11.1) qui s'étend dans le logement (107) le long de la partie annulaire (105.1) de la jante et une collerette de rotor (12) s'étendant en saillie vers l'extérieur du premier manchon de rotor de manière à s'étendre devant un flanc solidaire de la partie annulaire (105.1) de la jante ; la collerette de rotor ayant, à l'opposé du flanc de la jante, une surface formant la première surface (14) du rotor et le premier manchon ayant une surface formant la deuxième surface (16.1) du rotor ; et le stator (20) comprenant un manchon externe de stator (21.1) et une collerette de stator (22) s'étendant en saillie vers l'extérieur du manchon externe de stator de manière à avoir une surface formant la première surface (31') du stator s'étendant en regard de la première surface du rotor pour former la première paire de surfaces, le manchon externe de stator étant agencé pour être engagé dans le premier manchon de rotor et avoir une surface (32') formant la deuxième surface du stator en regard de la deuxième surface (16.1) du premier manchon de rotor pour former la deuxième paire de surfaces.

6. Dispositif de roulage selon la revendication 5, dans lequel la deuxième surface (32') du stator (20) est une surface libre de la deuxième pluralité d'aimants (32) portée par une surface extérieure du manchon externe de stator (21.1) faisant face à une surface intérieure du premier manchon de rotor (11.1) formant la deuxième surface (16.1) du rotor.

7. Dispositif de roulage selon la revendication 5, dans lequel le rotor (10) comprend un deuxième manchon de rotor (11.2) délimitant avec le premier manchon de rotor (11.1) une goulotte dans laquelle est engagé le manchon externe (21.1) de stator.

8. Dispositif de roulage selon la revendication 7, dans lequel le dispositif de freinage magnétique comprend au moins une troisième pluralité d'aimants (33) montée dans le manchon externe de stator (21.1) pour engendrer un troisième flux magnétique, radial, passant par une troisième paire de surfaces, le deuxième manchon de rotor (11.2) ayant une surface extérieure formant une troisième surface (15.2) du rotor (10) en regard d'une surface libre de la troisième pluralité d'aimants 33 formant une troisième surface du stator pour former la troisième paire de surfaces.

9. Dispositif de roulage selon la revendication 7, dans lequel le dispositif de freinage magnétique comprend au moins une troisième pluralité d'aimants (34) montée sur un manchon interne de stator (21.2) pour engendrer un troisième flux magnétique, radial, passant par une troisième paire de surfaces et le deuxième manchon de rotor (11.2) a :
- une surface extérieure formant la deuxième surface (15.2) du rotor (10) en regard d'une surface libre de la deuxième pluralité d'aimants (32) montée dans le manchon externe de stator (21.1) formant la deuxième surface (32') du stator, et
- une surface intérieure (16.2) s'étendant en regard d'une surface libre de la troisième pluralité d'aimants (34) formant la troisième surface (33') du stator.

10. Dispositif de roulage selon la revendication 6, dans lequel le dispositif de freinage magnétique comprend au moins une troisième pluralité d'aimants (33) solidaire de la surface intérieure du manchon externe de stator (21.1) pour engendrer un troisième flux magnétique, radial, passant par une troisième paire de surfaces et une quatrième pluralité d'aimants (34) solidaire de la surface extérieure d'un manchon interne de stator (21.2) pour engendrer un quatrième flux magnétique, radial, passant par une quatrième paire de surfaces ; dans lequel le deuxième manchon de rotor (21.2) a une surface extérieure formant la troisième surface (15.2) du rotor en regard d'une surface libre de la troisième pluralité d'aimants formant la troisième surface (33') du stator, et une surface intérieure formant la quatrième surface (16.2) du rotor s'étendant en regard d'une surface libre de la quatrième pluralité d'aimants formant la quatrième surface (34') du stator.

11. Dispositif de roulage selon la revendication 10, dans lequel dans lequel le rotor (10) comprend un troisième manchon de rotor (11.3) ayant une surface extérieure formant la cinquième surface (15.3) du rotor en regard d'une surface libre d'une cinquième pluralité d'aimants (35) solidaire d'une surface intérieure du manchon interne de stator (21.2) formant la cinquième surface (35') du stator.

12. Dispositif de roulage selon l'une quelconque des revendications 8 à 11, dans lequel une cloison de fond (13.1) réunit le premier manchon de rotor (11.1) et le deuxième manchon de rotor (11.2) en regard d'un bord libre du manchon externe de stator (21.1), la cloison de fond et le bord libre du manchon externe de stator étant agencés pour former des surfaces de friction et le stator (20) étant mobile par rapport au rotor (10) entre une position de friction dans laquelle les surfaces de friction sont en contact et une position sans friction dans laquelle les surfaces de friction sont écartées l'une de l'autre.

13. Dispositif de roulage selon l'une quelconque des revendications précédentes, dans lequel l'organe de commande comprend un actionneur linéaire relié au stator pour déplacer axialement le stator (20) entre une position de freinage dans laquelle les surfaces en regard sont rapprochées l'une de l'autre et une position de libre rotation dans laquelle les surfaces en regard sont éloignées.

14. Dispositif de roulage selon l'une quelconque des revendications précédentes formant partie d'un atterrisseur d'aéronef.

15. Aéronef comprenant une structure à laquelle sont fixés au moins un dispositif de roulage selon l'une quelconque des revendications précédentes.

## Patentansprüche

1. Rollvorrichtung für ein Fahrzeug, umfassend ein Rad (103) mit einer Nabe (104), die dafür ausgelegt ist, drehbar auf einer Welle (102) angebracht zu werden, und mit einer Felge (105), die über eine Radscheibe (106) derart mit der Nabe verbunden ist, dass sie sich koaxial zur Nabe erstreckt, wobei die Felge zumindest einen ersten ringförmigen Abschnitt (105.1) umfasst, der sich von der Radscheibe axial vorstehend erstreckt und gemeinsam mit dieser eine Aufnahme (107.1) begrenzt, die eine magnetische Wirbelstrombremsvorrichtung aufnimmt, welche umfasst: einen drehfest mit der Welle verbundenen Stator (20) und einen drehfest mit dem Rad verbundenen Rotor (10), der mit einer ersten Fläche (14) versehen ist, die einer ersten Fläche (31') des Stators gegenüberliegend angeordnet ist und gemeinsam mit dieser ein erstes Paar von Flächen bildet, sowie zumindest eine erste Mehrzahl von Magneten (31), die einen ersten Magnetfluss erzeugt, der das erste Paar von Flächen durchfließt, **dadurch gekennzeichnet, dass** der Rotor zumindest eine zweite Fläche (16.1) umfasst, die einer zweiten Fläche (32') des Stators gegenüberliegend angeordnet ist und gemeinsam mit dieser ein zweites Paar von Flächen bildet, und dass die magnetische Bremsvorrichtung zumindest eine zweite Mehrzahl von Magneten (32) umfasst, die einen zweiten Magnetfluss erzeugt, der das zweite Paar von Flächen durchfließt, und dass das erste Paar von Flächen und die erste Mehrzahl von Magneten derart ausgelegt sind, dass der erste Magnetfluss axial verläuft, und das zweite Paar von Flächen und die zweite Mehrzahl von Magneten derart ausgelegt sind, dass der zweite Magnetfluss radial verläuft.

2. Rollvorrichtung nach Anspruch 1, wobei das erste Paar von Flächen benachbart zu einer Felgenflanke angeordnet ist, die fest mit dem ersten ringförmigen Abschnitt (105.1) der Felge verbunden ist, welcher der Radscheibe (106) entgegengesetzt angeordnet ist, und wobei das zweite Paar von Flächen in der Aufnahme (107.1) benachbart zu dem ersten ringförmigen Abschnitt der Felge angeordnet ist.

3. Rollvorrichtung nach Anspruch 1 oder 2, wobei der Rotor (10) zumindest eine dritte Fläche (15.2) aufweist, die einer dritten Fläche (33') des Stators (20) gegenüberliegend angeordnet ist und gemeinsam mit dieser ein drittes Paar von Flächen bildet, und wobei die magnetische Bremsvorrichtung zumindest eine dritte Mehrzahl von Magneten (33) umfasst, die einen radial verlaufenden dritten Magnetfluss erzeugt, der das dritte Paar von Flächen durchfließt.

4. Rollvorrichtung nach Anspruch 3, wobei der Rotor (10) zumindest eine vierte Fläche (16.2) aufweist, die einer vierten Fläche (34') des Stators (10) gegenüberliegend angeordnet ist und gemeinsam mit dieser ein viertes Paar von Flächen bildet, und wobei die magnetische Bremsvorrichtung zumindest eine vierte Mehrzahl von Magneten umfasst, die einen radial verlaufenden vierten Magnetfluss erzeugt, der das vierte Paar von Flächen durchfließt.

5. Rollvorrichtung nach Anspruch 1, wobei der Rotor (10) umfasst: eine erste Rotorhülse (11.1), die sich in der Aufnahme (107) entlang des ringförmigen Abschnitts (105.1) der Felge erstreckt, und einen Rotorkragen (12), der derart aus der ersten Rotorhülse nach außen hin vorsteht, dass er sich vor einer fest mit dem ringförmigen Abschnitt (105.1) der Felge verbundenen Flanke erstreckt; wobei der Rotorkragen eine der Felgenflanke entgegengesetzte Fläche aufweist, welche die erste Fläche (14) des Rotors bildet, und die erste Hülse eine Fläche aufweist, welche die zweite Fläche (16.1) des Rotors bildet; und wobei der Stator (20) eine externe Statorhülse (21.1) und einen Statorkragen (22) umfasst, der derart aus der externen Statorhülse nach außen hin vorsteht, dass er eine Fläche aufweist, welche die erste Fläche (31') des Stators bildet, die sich der ersten Fläche des Rotors gegenüberliegend erstreckt und gemeinsam mit dieser das erste Paar von Flächen bildet, wobei die externe Statorhülse derart ausgelegt ist, dass sie in die erste Rotorhülse eingeführt werden kann und eine Fläche (32') aufweist, welche die zweite Fläche des Stators bildet, die der zweiten Fläche (16.1) der ersten Rotorhülse gegenüberliegt, wodurch das zweiten Paar von Flächen gebildet wird.

6. Rollvorrichtung nach Anspruch 5, wobei es sich bei der zweiten Fläche (32') des Stators (20) um eine freie Fläche der zweiten Mehrzahl von Magneten (32) handelt, die von einer Außenfläche der externen Statorhülse (21.1) getragen ist, die einer Innenfläche der ersten Rotorhülse (11.1) gegenüberliegt, welche die zweite Fläche (16.1) des Rotors bildet.

7. Rollvorrichtung nach Anspruch 5, wobei der Rotor (10) eine zweite Rotorhülse (11.2) umfasst, die gemeinsam mit der ersten Rotorhülse (11.1) eine Rinne begrenzt, in welche die externe Statorhülse (21.1) eingeführt ist.

8. Rollvorrichtung nach Anspruch 7, wobei die magnetische Bremsvorrichtung zumindest eine dritte Mehrzahl von Magneten (33) umfasst, die in der externen Statorhülse (21.1) angebracht ist und einen radial verlaufenden dritten Magnetfluss erzeugt, der ein drittes Paar von Flächen durchfließt, wobei die zweite Rotorhülse (11.2) eine Außenfläche aufweist, welche eine dritte Fläche (15.2) des Rotors (10) bildet, die einer freien Fläche der dritten Mehrzahl von Magneten (33) gegenüberliegt, welche eine dritte Fläche des Stators bildet, wodurch das dritte Paar von Flächen gebildet wird.

9. Rollvorrichtung nach Anspruch 7, wobei die magnetische Bremsvorrichtung zumindest eine dritte Mehrzahl von Magneten (34) umfasst, die auf einer internen Statorhülse (21.2) angebracht ist und einen radial verlaufenden dritten Magnetfluss erzeugt, der ein drittes Paar von Flächen durchfließt, und wobei die zweite Rotorhülse (11.2) aufweist:
- eine Außenfläche, welche die zweite Fläche (15.2) des Rotors (10) bildet, die einer freien Fläche der zweiten Mehrzahl von Magneten (32) gegenüberliegt, die in der externen Statorhülse (21.1) angebracht ist, welche die zweite Fläche (32') des Stators bildet, und
- eine Innenfläche (16.2), die sich einer freien Fläche der dritten Mehrzahl von Magneten (34) gegenüberliegend erstreckt, welche die dritte Fläche (33') des Stators bildet.

10. Rollvorrichtung nach Anspruch 6, wobei die magnetische Bremsvorrichtung umfasst: zumindest eine dritte Mehrzahl von Magneten (33), die fest mit der Innenfläche der externen Statorhülse (21.1) verbunden ist und einen radial verlaufenden dritten Magnetfluss erzeugt, der ein drittes Paar von Flächen durchfließt, sowie eine vierte Mehrzahl von Magneten (34), die fest mit der Außenfläche einer internen Statorhülse (21.2) verbunden ist und einen radial verlaufenden vierten Magnetfluss erzeugt, der ein viertes Paar von Flächen durchfließt; wobei die zweite Rotorhülse (21.2) aufweist: eine Außenfläche, welche die dritte Fläche (15.2) des Rotors bildet, die einer freien Fläche der dritten Mehrzahl von Magneten gegenüberliegt, welche die dritte Fläche (33') des Stators bildet, sowie eine Innenfläche, welche die vierte Fläche (16.2) des Rotors bildet, die sich einer freien Fläche der vierten Mehrzahl von Magneten gegenüberliegend erstreckt, welche die vierte Fläche (34') des Stators bildet.

11. Rollvorrichtung nach Anspruch 10, wobei der Rotor (10) eine dritte Rotorhülse (11.3) umfasst, die eine Außenfläche aufweist, welche die fünfte Fläche (15.3) des Rotors bildet, die einer freien Fläche einer fünften Mehrzahl von Magneten (35) gegenüberliegt, die fest mit einer Innenfläche der internen Statorhülse (21.2) verbunden ist, welche die fünfte Fläche (35') des Stators bildet.

12. Rollvorrichtung nach einem der Ansprüche 8 bis **11,** wobei die erste Rotorhülse (11.1) und die zweite Rotorhülse (11.2) einem freien Rand der externen Statorhülse (21.1) gegenüberliegend durch eine Rückwand (13.1) miteinander verbunden sind, wobei die Rückwand und der freie Rand der externen Statorhülse derart angeordnet sind, dass sie Reibflächen bilden, und der Stator (20) in Bezug auf den Rotor (10) zwischen einer Reibungsstellung, in welcher die Reibflächen miteinander in Kontakt stehen, und einer reibungsfreien Stellung, in welcher die Reibflächen voneinander beabstandet sind, beweglich ist.

13. Rollvorrichtung nach einem der vorhergehenden Ansprüche, wobei das Steuerorgan einen Linearantrieb umfasst, der derart mit dem Stator verbunden ist, dass er den Stator (20) zwischen einer Bremsstellung, in welcher die gegenüberliegenden Flächen aneinanderliegen, und einer frei drehenden Stellung, in welcher die gegenüberliegenden Flächen voneinander beabstandet sind, axial verschieben kann.

14. Rollvorrichtung nach einem der vorhergehenden Ansprüche, welche Bestandteil eines Luftfahrzeug-Fahrwerks ist.

15. Luftfahrzeug, umfassend eine Struktur, an welcher zumindest eine Rollvorrichtung nach einem der vorhergehenden Ansprüche befestigt ist.

## Claims

1. A rolling device for a vehicle, comprising a wheel (103) having a hub (104) arranged to be mounted to pivot on a shaft (102) and a rim (105) linked to the hub by a disc (106) so as to extend coaxially with the hub, the rim comprising at least one first annular portion (105.1) protruding axially from the disc and delimiting therewith a recess (107.1) receiving an eddy current magnetic braking device comprising a stator (20) constrained to rotate with the shaft, a rotor (10) constrained to rotate with the wheel and provided with a first surface (14) facing a first surface (31') of the stator to form a first pair of surfaces, and at least a first plurality of magnets (31) for generating a first magnetic flux which passes through the first pair of surfaces, **characterized in that** the rotor comprises at least one second surface (16.1) facing a second surface (32') of the stator to form a second pair of surfaces and the magnetic braking device comprises at least a second plurality of magnets (32) for generating a second magnetic flux which passes through the second pair of surfaces, and **in that** the first pair of surfaces and the first plurality of magnets are arranged in such a way that the first magnetic flux is axial and the second pair of surfaces and the second plurality of magnets are arranged in such a way that the second magnetic flux is radial.

2. A rolling device according to claim 1, in which the first pair of surfaces is arranged in the vicinity of a rim flank secured to the first annular portion (105.1) of the rim opposite the disc (106) and the second pair of surfaces is arranged in the recess (107.1) in the vicinity of the first annular portion of the rim.

3. A rolling device according to claim 1 or 2, in which the rotor (10) has at least one third surface (15.2) facing a third surface (33') of the stator (20) to form a third pair of surfaces and the magnetic braking device comprises at least a third plurality of magnets (33) for generating a third magnetic flux, which is radial, passing through the third pair of surfaces.

4. A rolling device according to claim 3, in which the rotor (10) has at least one fourth surface (16.2) facing a fourth surface (34') of the stator (10) to form a fourth pair of surfaces and the magnetic braking device comprises at least a fourth plurality of magnets for generating a fourth magnetic flux, which is radial, passing through the fourth pair of surfaces.

5. A rolling device according to claim 1, in which: the rotor (10) comprises a first rotor sleeve (11.1) that extends in the recess (107) along the annular portion (105.1) of the rim and a rotor flange (12) protruding outwards from the first rotor sleeve in such a way as to extend in front of a flank secured to the annular portion (105.1) of the rim; the rotor flange having, opposite the flank of the rim, a surface forming the first surface (14) of the rotor and the first sleeve having a surface forming the second surface (16.1) of the rotor; and the stator (20) comprising an stator outer sleeve (21.1) and a stator flange (22) protruding outwards from the stator outer sleeve in such a way as to have a surface forming the first surface (31') of the stator extending facing the first surface of the rotor to form the first pair of surfaces, the stator outer sleeve being arranged to be engaged in the first rotor sleeve and have a surface (32') forming the second surface of the stator facing the second surface (16.1) of the first rotor sleeve to form the second pair of surfaces.

6. A rolling device according to claim 5, in which the second surface (32') of the stator (20) is a free surface of the second plurality of magnets (32) carried by an external surface of the stator outer sleeve (21.1) facing an internal surface of the first rotor sleeve (11.1) forming the second surface (16.1) of the rotor.

7. A rolling device according to claim 5, in which the rotor (10) comprises a second rotor sleeve (11.2) delimiting, with the first rotor sleeve (11.1), a channel in which the stator outer sleeve (21.1) is engaged.

8. A rolling device according to claim 7, in which the magnetic braking device comprises at least a third plurality of magnets (33) mounted in the stator outer sleeve (21.1) to generate a third magnetic flux, which is radial, passing through a third pair of surfaces, the second rotor sleeve (11.2) having an external surface forming a third surface (15.2) of the rotor (10) facing a free surface of the third plurality of magnets 33 forming a third surface of the stator to form the third pair of surfaces.

9. A rolling device according to claim 7, in which the magnetic braking device comprises at least a third plurality of magnets (34) mounted on a stator inner sleeve (21.2) to generate a third magnetic flux, which is radial, passing through a third pair of surfaces, and the second rotor sleeve (11.2) has:
- an external surface forming the second surface (15.2) of the rotor (10) facing a free surface of the second plurality of magnets (32) mounted in the stator outer sleeve (21.1) forming the second surface (32') of the stator; and
- an internal surface (16.2) extending facing a free surface of the third plurality of magnets (34) forming the third surface (33') of the stator.

10. A rolling device according to claim 6, in which the magnetic braking device comprises at least a third plurality of magnets (33) secured to the internal surface of the stator outer sleeve (21.1) to generate a third magnetic flux, which is radial, passing through a third pair of surfaces, and a fourth plurality of magnets (34) secured to the external surface of a stator inner sleeve (21.2) to generate a fourth magnetic flux, which is radial, passing through a fourth pair of surfaces; in which the second rotor sleeve (21.2) has an external surface forming the third surface (15.2) of the rotor facing a free surface of the third plurality of magnets forming the third surface (33') of the stator, and an internal surface forming the fourth surface (16.2) of the rotor extending facing a free surface of the fourth plurality of magnets forming the fourth surface (34') of the stator.

11. A rolling device according to claim 10, in which the rotor (10) comprises a third rotor sleeve (11.3) having an external surface forming the fifth surface (15.3) of the rotor facing a free surface of a fifth plurality of magnets (35) secured to an internal surface of the stator inner sleeve (21.2) forming the fifth surface (35') of the stator.

12. A rolling device according to any one of claims 8 to 11, in which a bottom partition (13.1) joins the first rotor sleeve (11.1) and the second rotor sleeve (11.2) opposite a free edge of the stator outer sleeve (21.1), the bottom partition and the free edge of the stator outer sleeve being arranged to form friction surfaces and the stator (20) being able to move in relation to the rotor (10) between a friction position in which the friction surfaces are in contact and a frictionless position in which the friction surfaces are spaced apart from one another.

13. A rolling device according to any one of the preceding claims, in which the control member comprises a linear actuator linked to the stator to move the stator (20) axially between a braking position in which the facing surfaces are brought closer together and a freely rotating position in which the facing surfaces are moved apart.

14. A rolling device according to any one of the preceding claims forming part of an aircraft landing gear.

15. An aircraft comprising a structure to which at least one rolling device according to any one of the preceding claims is fastened.
